(19) Europäisches Patentamt
European Patent Office
Office européen des brevets

(11) **EP 2 520 443 B1**

(12) **FASCICULE DE BREVET EUROPEEN**

(45) Date de publication et mention
de la délivrance du brevet:
**19.03.2014 Bulletin 2014/12**

(51) Int Cl.:
***B44B 3/02*** *(2006.01)*      ***B44B 11/02*** *(2006.01)*
***B44C 1/22*** *(2006.01)*      ***G01S 5/10*** *(2006.01)*

(21) Numéro de dépôt: **12166582.2**

(22) Date de dépôt: **03.05.2012**

(54) **Dispositif et procédé de gravure d'un motif**

Vorrichtung und Verfahren zum Gravieren eines Motives

Apparatus and Method of Engraving a Motiv

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.05.2011 FR 1153831**

(43) Date de publication de la demande:
**07.11.2012 Bulletin 2012/45**

(73) Titulaire: **Commissariat à l'Énergie Atomique
et aux Énergies Alternatives
75015 Paris (FR)**

(72) Inventeur: **Aubouy, Miguel
38000 Grenoble (FR)**

(74) Mandataire: **Colombo, Michel et al
Brevinnov
310 avenue Berthelot
69008 Lyon (FR)**

(56) Documents cités:
**EP-B1- 2 289 708      DE-A1- 3 906 336
DE-A1- 4 429 751      DE-A1-102004 054 940
FR-A1- 2 831 258      US-A- 4 564 736
US-A- 5 436 027**

**Description**

L'invention concerne un dispositif et un procédé de gravure d'un motif dans une zone de gravure aménagée sur un support matériel. L'invention a également pour objet un support d'enregistrement d'informations, un stylo et une borne pour la mise en oeuvre de ce procédé de gravure.

Par « gravure », on désigne l'action de creuser dans le support un trou. Ce trou peut être débouchant ou non. Lorsqu'une succession de trous débouchants sont réalisés les uns à côté des autres, cela peut permettre de découper le support. Les trous non débouchants permettent de graver le motif en relief dans le support.

L'invention concerne en particulier des dispositifs de gravure « sans-contact », c'est-à-dire des dispositifs dans lesquels la tête de gravure ne vient pas directement en contact mécanique avec le support gravé.

Des dispositifs de gravure comprennent au moins un stylo librement déplaçable manuellement par rapport à la zone de gravure, ce stylo étant équipé d'une tête de gravure apte à graver le support au niveau d'un point de gravure lorsque la gravure est déclenchée.

Par exemple, un tel dispositif est divulgué dans la demande de brevet US4 564 736. Dans ce dispositif connu, la tête de gravure est librement déplaçable par l'opérateur. Ainsi, ce dispositif n'impose que très peu de contrainte sur le support gravé. Par exemple, le support peut avoir n'importe quelles dimensions et n'importe quelle inclinaison. Dès lors ce dispositif est utilisable pour graver le motif sur des supports aussi varier qu'un mur, un plafond ou un sol d'un bâtiment, une plaque ou autre.

Toutefois, avec les dispositifs connus, la fidélité de la reproduction du motif sur le support dépend en grande partie de la dextérité de l'opérateur. En effet, c'est l'opérateur seul qui dirige le stylo et qui déclenche la gravure.

Par ailleurs, pour éviter les projections d'éclats, l'opérateur a tendance à éloigner le stylo du support. Or, plus le stylo est éloigné du support plus il est difficile de graver précisément. Il existe donc une contradiction entre la sécurité qui impose une distance la plus grande possible entre le stylo et le support et la précision qui impose de garder le stylo le plus proche possible du support.

De l'état de la technique est connu de : US4564736A, DE102004054940A1, DE3906336A1, US5436027A, FR2831258A1 et DE4429751A1.

L'invention vise à remédier à au moins l'un de ces inconvénients. Elle a donc pour objet un dispositif de gravure dans lequel le dispositif comporte :

- une unité de mesure de la position et de l'orientation de la tête de gravure par rapport au support, et
- une unité de commande apte :

  • à calculer les coordonnées du point de gravure en fonction de la position et de l'orientation mesurées de la tête de gravure, et
  • à déclencher la gravure au niveau de ce point de gravure si les coordonnées calculées pour ce point de gravure correspondent aux coordonnées d'un point à graver codé dans un plan préenregistré du motif et, dans le cas contraire, à inhiber automatiquement la gravure.

Dans le dispositif ci-dessus, seuls les points de gravure correspondant aux coordonnées d'un point à graver peuvent être gravés. Dès lors, la fidélité de la reproduction du motif à graver sur le support ne dépend plus de la dextérité de l'opérateur.

De plus, l'inhibition de la gravure en un point incorrect se produit indépendamment de la distance qui sépare le stylo du support. Ainsi, l'opérateur peut maintenir le stylo à une distance de sécurité du support sans pour autant que la précision du motif gravé en soit affectée.

Enfin, le fait que le stylo reste librement déplaçable manuellement par rapport au support permet toujours de graver sur une très grande variété de supports.

Les modes de réalisation du dispositif de gravure ci-dessus peuvent comporter une ou plusieurs des caractéristiques suivantes :

■ le dispositif comprend au moins une borne repère amovible positionnable manuellement sur le support et associée à un point correspondant du motif à graver par une relation prédéfinie indépendante de la position de cette borne repère sur le support, l'unité de mesure est apte à mesurer la position et l'orientation de la tête de gravure par rapport à la borne repère, et l'unité de commande est apte à établir la correspondance et, en alternance, l'absence de correspondance entre les coordonnées calculées du point de gravure et les coordonnées du point à graver en fonction de la relation prédéfinie qui associe un point du motif à cette borne ;
■ le dispositif comprend :

- au moins deux bornes repères,
- l'unité de mesure est apte à mesurer la distance entre ces deux bornes repères, et
- l'unité de commande est apte à établir la correspondance et, en alternance, l'absence de correspondance entre les coordonnées calculées du point de gravure et les coordonnées du point à graver en fonction en plus de la distance mesurée entre ces deux bornes repères pour étirer ou rétrécir le motif proportionnellement à cette distance ;

■ le dispositif comprend au moins une borne relais positionnable manuellement indépendamment de la borne repère, cette borne relais n'étant pas associée à un point du motif par une relation prédéfinie indépendante de sa position par rapport au support, et l'unité de mesure comprend aussi :

- un capteur de la position et de l'orientation de la tête de gravure dans un référentiel solidaire de cette borne relais,
- un capteur de la position et de l'orientation de la borne relais par rapport à la borne repère, et
- un convertisseur de la position et de l'orientation mesurées de la tête de gravure exprimées dans le référentiel solidaire de la borne relais en une position et une orientation relatives à la borne repère ;

■ la tête de gravure est apte à émettre un faisceau laser qui grave le point de gravure ;
■ le dispositif comporte une table équipée d'une vitre de protection contre les projections d'éclats de gravure et des pieds destinés à reposer sur le support, la ou les bornes repères sont fixées sans aucun degré de liberté à cette table ;
■ la tête de gravure est apte à projeter des particules en matériau abrasif qui gravent le point de gravure.

Ces modes de réalisation du dispositif présentent en outre les avantages suivants :

- l'utilisation d'une borne repère liée à un point à graver du plan pré-enregistré permet simplement de positionner le motif sur le support ;
- utiliser au moins deux bornes repères et mesurer la distance entre ces deux bornes repères permet d'étirer ou de rétrécir le motif gravé proportionnellement à cette distance mesurée,
- utiliser une borne relais permet d'augmenter les dimensions de la zone de gravure sans augmenter la puissance des signaux utilisés pour mesurer la position du stylo,
- l'utilisation de la table ci-dessus permet de positionner en une seule opération les bornes repères et la vitre de protection.

L'invention a également pour objet un procédé de gravure d'un motif dans une zone de gravure aménagée sur un support matériel, ce procédé comportant :

- le déplacement manuel d'un stylo librement dans la zone de gravure, ce stylo étant équipé d'une tête de gravure apte à graver le support au niveau d'un point de gravure lorsque la gravure est déclenchée,
- la mesure de la position et de l'orientation de la tête de gravure par rapport au support,
- le calcul des coordonnées du point de gravure en fonction de la position et de l'orientation mesurées de la tête de gravure, et
- le déclenchement de la gravure au niveau de ce point de gravure si les coordonnées calculées pour ce point de gravure correspondent aux coordonnées d'un point à graver codé par un plan pré-enregistré du motif et, dans le cas contraire, l'inhibition automatique de la gravure.

Les modes de réalisation de ce procédé de gravure peuvent comporter une ou plusieurs des caractéristiques suivantes :

■ le procédé comprend :

a) la mémorisation de chaque point du motif déjà gravé en réponse au déclenchement de la gravure,
b) l'inhibition de la gravure de tout point déjà gravé, et
c) après avoir été déclenchée, la gravure d'un point est automatiquement arrêtée après une durée prédéterminée ;

■ les étapes a) à c) sont réitérées pour chaque strate du plan pré-enregistré, ce plan pré-enregistré comportant au moins deux strates codant chacune les coordonnées des points à graver dans une strate respective du support ;
■ le procédé comprend :

- le décompte du temps cumulé passé à graver un même point de gravure, et
- l'inhibition de toute nouvelle gravure de ce point de gravure si le temps de gravure décompté franchit un seuil prédéterminé et, dans le cas contraire, l'autorisation d'une nouvelle gravure de ce point ;

■ le procédé comprend la détermination de la distance qui sépare le stylo du support à partir de la mesure de la position et de l'orientation de la tête de gravure et l'inhibition de la gravure du motif sur le support ou le déclenchement d'une alarme si cette distance est inférieure à un seuil prédéterminé.

Ces modes de réalisation du procédé présentes en outre les avantages suivants :

- l'arrêt automatique de la gravure d'un point après une durée prédéterminée permet de maîtriser la profondeur de la gravure ;
- l'arrêt automatique de la gravure d'un point de chaque strate du plan pré-enregistré permet de réaliser une sculpture en relief ;
- l'arrêt automatique de la gravure d'un point en fonction du temps cumulé de gravure permet également de maîtriser la profondeur de la gravure de ce point ;
- mesurer la distance h permet d'accroître la sécurité du procédé en aidant l'opérateur à maintenir une distance de sécurité entre la tête de gravure et le support.

L'invention a également pour objet un support d'enregistrement d'informations comportant des instructions pour la mise en oeuvre du procédé de gravure ci-dessus, lorsque ces instructions sont exécutées par un calculateur électronique.

L'invention a également pour objet un stylo pour la mise en oeuvre du dispositif de gravure ci-dessus, ce stylo étant équipé d'une tête de gravure déplaçable manuellement dans la zone de gravure et d'au moins une partie des éléments de l'unité de mesure apte à mesurer la position de la tête de gravure par rapport au support.

L'invention sera mieux comprise à la lecture de la description qui va suivre donnée uniquement à titre d'exemple non limitatif et faite en se référant aux dessins sur lesquels :

- la figure 1 est une illustration schématique et en perspective d'un premier mode de réalisation d'un dispositif de gravure,
- la figure 2 est un organigramme d'un procédé de gravure à l'aide du dispositif de la figure 1,
- la figure 3 est une illustration schématique et en perspective d'un deuxième mode de réalisation d'un dispositif de gravure,
- la figure 4 est une illustration schématique en vue de dessus d'un troisième mode de réalisation d'un dispositif portable de gravure, et
- la figure 5 est une illustration schématique en perspective d'un quatrième mode de réalisation d'un dispositif de gravure.

Dans ces figures, les mêmes références sont utilisées pour désigner les mêmes éléments.

Dans la suite de cette description, les caractéristiques et fonctions bien connues de l'homme du métier ne sont pas décrites en détail.

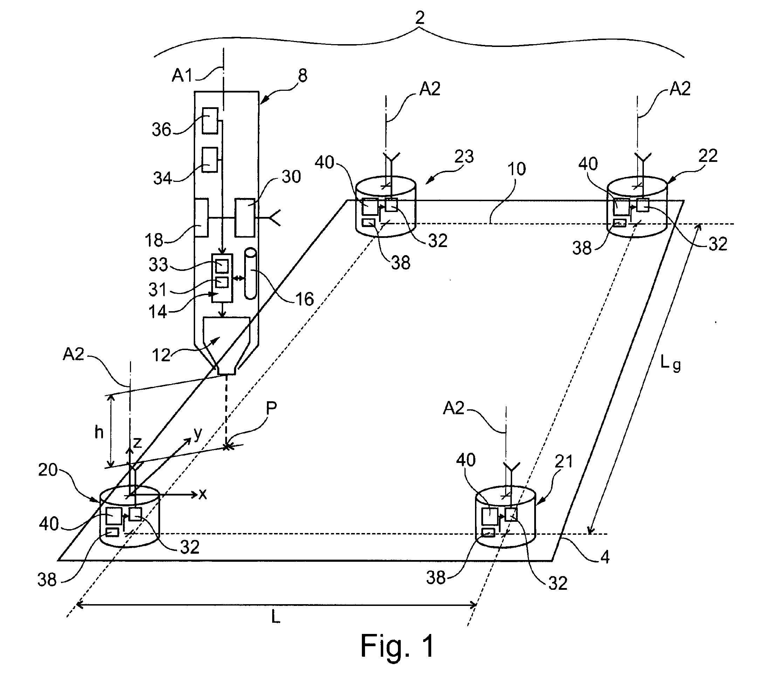

La figure 1 représente un dispositif 2 de gravure d'un motif sur un support matériel 4 horizontal.

Ici, par motif, on désigne tout type de motif susceptible d'être gravé sur le support 4. Ce motif peut correspondre à une photo, un texte, un motif géométrique, un plan de coupe ou autres.

Le support 4 présente une face supérieure plane et horizontale. Le support 4 est réalisé dans un matériau susceptible d'être gravé. Par exemple, le matériau est du métal, du plastique, du verre, du bois, du papier, de la peau ou autres.

Dans ce mode de réalisation, le dispositif 2 est portable c'est-à-dire qu'il est directement transportable par un être humain sans avoir recours à des moyens techniques de levage. A cet effet, le poids de l'ensemble des éléments du dispositif 2 est typiquement inférieur à 10 kg et, de préférence, inférieur à 5 ou 1 kg. Pour faciliter le transport, l'encombrement de l'ensemble des éléments de ce dispositif 2 est typiquement inférieur à 0,15 m$^3$ et, de préférence, inférieur à 10$^{-3}$ ou 10$^{-4}$ m$^3$.

Le dispositif 2 comprend un stylo 8 manuellement déplaçable par un opérateur au-dessus d'une zone de gravure 10 aménagée sur la face supérieure du support 4 et à l'intérieur de laquelle doit être gravé le motif. Le stylo 8 est séparé verticalement du support 4 par une hauteur h supérieure à un seuil S$_1$ non nul de manière à ne pas venir directement en contact avec le support.

La zone de gravure 10 est ici rectangulaire avec une largeur L et une longueur Lg.

Le stylo 8 s'étend essentiellement le long d'un axe longitudinal A1. Les dimensions du stylo 8 sont prévues pour que celui-ci soit facilement manipulable par la main de l'opérateur. Par exemple, la longueur du stylo 8 est inférieure à 20 cm et sa largeur est inférieure à 5 cm. Le poids du stylo 8 est typiquement inférieur à 1 kg et, de préférence, inférieur à 200 g.

Le stylo 8 comprend une tête de gravure 12 regroupant l'ensemble des éléments nécessaires à la gravure du support 4. Par exemple, dans ce mode de réalisation, la tête 12 incorpore une source de rayons laser. Par exemple, la source est une diode laser émettant à une longueur d'onde de 808nm et d'une puissance de 2W. Cette tête 12 émet donc un faisceau laser apte à graver le support 4 au niveau d'un point P de gravure. Le point P se situe à l'intersection entre une ligne de visée et le support 4. Ici, la ligne de visée est confondue avec l'axe A1.

Le stylo 8 comprend également :

- une unité 14 de commande de la tête de gravure 12,
- un mémoire 16 contenant un plan du motif à graver sur le support 4,
- une interface 18, et
- une source d'énergie (non représentée) nécessaire à son fonctionnement telle qu'une batterie.

L'unité 14 est raccordée à la mémoire 16. Le plan enregistré dans la mémoire 16 code les coordonnées de chaque point à graver pour former le motif. Plus précisément, dans ce mode de réalisation, le plan est divisé en plusieurs strates empilées dans un ordre prédéterminé. Chaque strate correspond à une coupe du motif à graver et à une profondeur de gravure. L'empilement des strates dans une direction perpendiculaire au support définit un motif à graver en trois dimensions. A titre d'illustration, chaque strate est ici enregistrée dans un format bitmap (bmp). Ainsi, chaque strate est formée d'une matrice de points et, pour chaque point, le fichier indique, en plus de ses coordonnées, si celui-ci est à graver ou non. Par analogie au point d'un fichier bitmap codant une image, les points de ce fichier sont appelés « pixel » par la suite. Ici, le plan est rectangulaire.

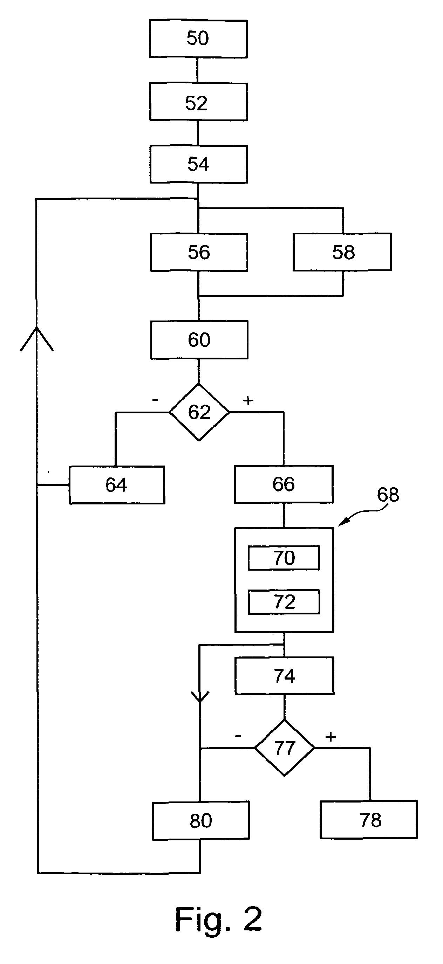

L'unité 14 de commande est réalisée à partir de calculateurs électroniques programmables aptes à exécuter des instructions enregistrées sur un support d'enregistrement d'informations. A cet effet, la mémoire 16 comprend les instructions nécessaires à l'exécution du procédé de la figure 2, lorsqu'elles sont exécutées par l'unité 14.

L'interface 18 permet de raccorder le stylo 8 à un ordinateur pour enregistrer le plan du motif à graver dans la mémoire 16.

Le dispositif 2 comprend également des bornes repères amovibles positionnables manuellement sur le support 4. A titre d'illustration, dans ce mode de réalisation, le dispositif comprend quatre bornes repères 20 à 23.

Les bornes 20 à 23 sont rapportées sur le support 4 déjà existant. Elles sont donc mécaniquement indépendantes du support 4. Elle peuvent être librement positionnées sur le support 4 par l'opérateur. Ici, les bornes sont déposées sur ce support 4 et uniquement maintenues en place sur le support 4 par la gravité.

Chacune de ces bornes repères est associée à un point du motif à graver par une relation prédéfinie indépendante de la position de la borne sur le support. Cette relation prédéfinie est par exemple enregistrée dans la mémoire 16. Ici cette relation prédéfinie indique que chacune des bornes 20 à 23 correspond à un angle du plan rectangulaire. Ces bornes délimitent donc la zone de gravure 10.

Le dispositif 2 comprend une unité de mesure de la position et de l'orientation de la tête de gravure 12 par rapport aux bornes repères 20 à 23. Cette unité mesure les six degrés de liberté de la tête de gravure. A cet effet, la position et l'orientation de la tête de gravure sont indiquées, respectivement, par deux triplets de coordonnées x, y, z et $\theta_x$, $\theta_y$, $\theta_z$ exprimés dans un référentiel XYZ orthogonal fixé sans aucun degré de liberté à la borne 20. Ici, les directions X et Y du référentiel XYZ sont parallèles à la face supérieure du support 4 tandis que la direction Z s'étend verticalement. Les angles $\theta_x$, $\theta_y$ et $\theta_z$ correspondent aux angles que fait l'axe A1, respectivement, avec les directions X, Y et Z.

Pour déterminer la position de la tête de gravure 12, dans ce mode de réalisation, le stylo 8 et les bornes 20 à 23 sont équipées, respectivement, d'émetteurs/récepteurs 30 et 32 d'ondes électromagnétiques. Par exemple, les émetteurs/récepteurs 30 et 32 sont des émetteurs/récepteurs d'ondes Ultra-large bande plus connues sous l'acronyme UWB (Ultra Wide Band). Chacun de ces émetteurs/récepteurs est équipé d'une horloge permettant de mesurer les instants d'émission et de réception des ondes de manière à pouvoir mesurer le temps de propagation de l'onde entre les émetteurs/récepteurs 30 et 32.

L'unité 14 est aussi équipée d'un déterminateur 33 et d'une horloge 31. Le déterminateur 33 détermine la distance qui sépare le stylo 8 de chacune des bornes 20 à 23 à partir des temps de propagation mesurés.

L'orientation de la tête de gravure est ici représentée par l'orientation de l'axe A1 qui est solidaire de la tête de gravure. La mesure de l'orientation de la tête de gravure 12 consiste donc à mesurer les angles $\theta_x$, $\theta_y$ et $\theta_z$. A cet effet, l'unité de mesure comporte également :

- un accéléromètre 34 et un magnétomètre 36 fixés sans aucun degré de liberté au stylo 8, et

- des accéléromètres 38 et des magnétomètres 40 fixés sans aucun degré de liberté à chacune des bornes 20 à 23.

Par exemple, l'accéléromètre 34 et le magnétomètre 36 sont logés à l'intérieur du stylo 8. Un accéléromètre 38 et un magnétomètre 40 sont logés à l'intérieur de chacune des bornes 20 à 23.

L'accéléromètre 34 mesure l'angle que fait l'axe A1 avec la direction verticale représentée par la direction locale du champ de gravité terrestre. Le magnétomètre 36 mesure l'angle que fait l'axe A1 avec le nord magnétique du champ magnétique terrestre.

De préférence, l'accéléromètre 34 et le magnétomètre 36 sont placés dans la partie du stylo 8 la plus éloignée de la tête de gravure 12 de manière à augmenter la précision de la mesure de l'orientation de l'axe A1.

L'accéléromètre 38 mesure l'angle que fait un axe A2 solidaire de la borne repère avec la verticale. Le magnétomètre 40 mesure l'angle que fait cet axe A2 avec le nord magnétique. A cet effet, le magnétomètre 40, comme le magnétomètre 36, sont des magnétomètres triaxes.

L'orientation de l'axe A2 doit être représentative de l'orientation de la face supérieure du support 4. Pour cela, ici, chaque borne repère est conformée pour que lorsque elle est déposée sur le support 4, l'axe A2 soit systématiquement perpendiculaire à la face supérieure du support 4. Par exemple, chacune des bornes repère comporte au moins une face plane perpendiculaire à l'axe A2 et destinée à être directement en appui sur la face supérieure du support 4. De préférence, chaque borne repère comporte au plus deux de ces faces planes, les autres faces de la borne étant concaves. Ici, chaque borne à la forme d'un cylindre dont l'axe de révolution est l'axe A2.

Le fonctionnement du dispositif 2 va maintenant être décrit plus en détail en regard du procédé de la figure 2.

Initialement, lors d'une étape 50, le plan du motif à graver est enregistré dans la mémoire 16. Par exemple, à cet effet, le stylo 8 est raccordé à un ordinateur par l'intermédiaire de l'interface 18.

Ensuite, lors d'une étape 52, les bornes 20 à 23 sont déposées manuellement sur le support 4. Ici, elles sont positionnées de manière à délimiter les angles de la zone de gravure 10.

Lors d'une étape 54, le stylo 8 est mis sous tension puis approché de la zone de gravure 10. Une copie de travail du plan mémorisé est alors automatiquement créée dans la mémoire 16 si celle-ci n'existait pas déjà.

Dès lors, lors d'une étape 56, la position de la tête de gravure 12 par rapport aux bornes 20 à 23 est mesurée. A cet effet, le déterminateur 33 mesure les temps de propagation de l'onde électromagnétique émise par l'émetteur/récepteur 30 jusqu'aux bornes 20 à 23. Ces temps de propagation sont ensuite utilisés par l'unité 14 pour établir la distance qui sépare la tête de gravure 12 de chacune des bornes 20 à 23. De façon similaire, lors de l'étape 56, les distances qui séparent les bornes 20 à 23 les unes des autres sont mesurées. A partir de ces différents temps de propagations, l'unité 14 établit les coordonnées x, y et z de la tête de gravure 12 dans le référentiel XYZ, par exemple, par triangulation.

En parallèle, lors d'une étape 58, l'orientation de l'axe A1 par rapport aux directions X, Y et Z est également mesurée. A cet effet, l'accéléromètre 34 et le magnétomètre 36 mesure, respectivement, l'orientation de l'axe A1 par rapport à la verticale et au nord magnétique. Dans le même temps, les accéléromètres 38 et les magnétomètres 40 de chacune des bornes 20 à 23 mesurent l'orientation de l'axe A2, respectivement, par rapport à la verticale et au nord magnétique. Ces mesures sont ensuite transmises à l'unité 14 qui les combine pour obtenir les coordonnées angulaires $\theta_x$, $\theta_y$ et $\theta_z$ de l'axe A1 dans le référentiel XYZ.

A partir de la position et de l'orientation mesurée du stylo 8, lors d'une étape 60, l'unité 14 détermine la distance verticale $\underline{h}$ (figure 1) qui sépare la tête de gravure 12 du support 4 et la valeur de l'angle $\theta_z$ entre l'axe A1 et la direction verticale Z.

Lors d'une étape 62, l'unité 14 vérifie si le stylo se trouve à l'intérieur d'un cône d'autorisation de gravure sensiblement perpendiculaire au plan du support 4. Par exemple, à cet effet, la distance $\underline{h}$ et la valeur absolue de l'angle $\theta_z$ sont comparées, respectivement, à des seuils prédéterminés $S_1$ et $S_2$. Si la distance $\underline{h}$ est inférieure au seuil $S_1$ ou si la valeur absolue de l'angle $\theta_z$ est supérieure au seuil $S_2$ alors, lors d'une étape 64, la gravure du support 4 est automatiquement inhibée. Ainsi, les seuils $S_1$ et $S_2$ définissent le cône d'autorisation de gravure. Lorsque le stylo n'est pas à l'intérieur de ce cône, c'est-à-dire qu'il est trop près du support 4 ou trop incliné par rapport à ce support, alors la gravure est interdite car elle ne peut pas être réalisée correctement ou dans des conditions de sécurité optimales. Par exemple, le seuil $S_1$ correspond à une distance de sécurité qu'il faut conserver pour éviter que l'opérateur ne soit blessé par des projections d'éclats.

Dans le cas contraire, le procédé se poursuit par une étape 66 lors de laquelle les coordonnées du point P (figure 1) de gravure sur le support 4 sont calculées. Les coordonnées du point P sont obtenues à partir des coordonnées mesurées x, y, z et $\theta_x$, $\theta_y$, $\theta_z$ de la tête de gravure. Par exemple, les coordonnées du point P sont obtenues en calculant les coordonnées du point d'intersection entre l'axe A1 et la zone de gravure 10.

Ensuite, lors d'une étape 68, l'unité 14 détermine si les coordonnées du point P correspondent à des coordonnées d'un point à graver codé dans la copie de travail du plan pré-enregistré dans la mémoire 16. Pour cela, la relation prédéfinie reliant chaque borne repère à un point du motif est utilisée.

Par exemple, si cela n'a pas déjà été fait, lors d'une opération 70, l'unité 14 calcule la dimension de la zone de gravure 10 à partir de la position des différentes bornes 20 à 23 par rapport au stylo 8 et des distances mesurées entre les bornes 20 à 23. Ensuite, lors de cette opération 70, l'unité 14 calcule un facteur d'étirement permettant de convertir les coordonnées du point P exprimées dans le référentiel XYZ en des coordonnées correspondant à un pixel du plan du motif à graver. Par exemple, deux facteurs d'étirement $C_x$ et $C_y$ selon, respectivement, les directions X et Y sont calculés à l'aide des relations suivantes :

$$C_x = (L_{img}/L)$$

$$C_y = (L_{gimg}/Lg)$$

où $L_{img}$ et $L_{gimg}$ sont respectivement la largeur et la longueur du plan du motif à graver.

L'espacement entre les bornes détermine donc les dimensions du motif qui va être gravé. En d'autres termes, plus l'on espace les bornes repères l'une de l'autre, plus l'on agrandit le motif à graver. A l'inverse, plus l'on rapproche les bornes repères l'une de l'autre plus l'on rétrécit le motif à graver. Ici, dans tous les cas, le motif à graver occupe l'ensemble de la zone de gravure.

Dans ce cas particulier, étant donné que la zone de gravure et le motif à graver sont rectangulaires, les facteurs d'étirement $C_x$ et $C_y$ sont constants quelles que soit les coordonnées x, y du point P.

Toutefois, si la zone de gravure et le motif à graver n'ont pas la même forme (par exemple la zone de gravure délimitée est trapézoïdale et le motif à graver est rectangulaire) alors les facteurs d'étirement $C_x$ et $C_y$ varient en fonction des coordonnées x, y du point P de manière à ce que le motif remplisse toujours complètement la zone de gravure.

Une fois les facteurs d'étirement $C_x$, $C_y$ établis, lors d'une opération 72, ceux-ci sont utilisés pour trouver les coordonnées du pixel du plan correspondant aux coordonnées x et y du point P. Par exemple, les coordonnées x et y sont simplement multipliées, respectivement par les facteurs d'étirement $C_x$ et $C_y$ pour obtenir les coordonnées $x_p$ et $y_p$ du pixel correspondant. Une fois le pixel correspondant trouvé, le fichier contenant la copie de travail du plan indique si ce pixel est un pixel à graver ou non. Pour cela, l'unité 14 parcourt les informations associées au pixel de coordonnées $x_p$ et $y_p$ dans chacune des strates du plan. Si l'une de ces informations indiques que ce pixel est à graver, alors celui-ci correspond à un pixel à graver.

Si le pixel correspondant trouvé est un pixel à graver, lors d'une étape 74, l'unité 14 commande la tête de gravure pour déclencher automatiquement la gravure de ce pixel. Après avoir été déclenchée, la gravure s'arrête automatiquement après une durée prédéterminée $\Delta$. On génère ainsi une impulsion laser de durée $\Delta$. La

durée Δ est courte, c'est-à-dire typiquement inférieure à 0,1s ou 10μs. Ici, la durée Δ après le déclenchement est décomptée par l'horloge 31. Le fait de générer une impulsion laser de durée connue permet de maitriser la profondeur du trou creusé lors de chaque passage du stylo sur ce point P. Lors de cette étape, de préférence, l'intensité du faisceau laser projeté sur le support est réglée en fonction de l'orientation mesurée du stylo 12. Par exemple, l'intensité est réglée en ajustant la puissance du faisceau laser.

Si le pixel correspondant n'est pas un pixel à graver, la gravure du point P est automatiquement inhibée. Pour cela, l'étape 74 n'est pas exécutée est l'on procède directement à une étape 80.

Après l'étape 74, lors d'une étape 77, les coordonnées du pixel gravé sont mémorisées. Dans le cas particulier décrit ici, l'unité 14 modifie la strate de la copie de travail du plan dans laquelle le pixel de coordonnées $x_p$ et $y_p$ était associé à une information indiquant qu'il était à graver. Plus précisément, cette modification consiste à remplacer cette information par une autre information indiquant que ce pixel de cette strate n'est pas à graver. Ainsi, si le stylo est de nouveau déplacé sur le même point P, ce point P sera à nouveau gravé uniquement s'il existe encore dans la copie de travail du plan une strate dans laquelle le pixel de coordonnées $x_p$ et $y_p$ est associé à une information indiquant qu'il est à graver. Dans le cas contraire, ce pixel ne sera pas gravé à nouveau. Cela permet donc de maîtriser la profondeur de gravure en chaque point P.

Lors de l'étape 77, l'unité 14 vérifie également si l'ensemble des pixels à graver du plan l'ont déjà été. Par exemple, cette vérification est réalisée en balayant les pixels de la copie de travail du plan pour déterminer s'il existe encore des pixels à graver.

Si tous les pixels ont déjà été gravés, on procède à une étape 78 lors de laquelle le procédé de gravure est automatiquement arrêté. Le stylo est alors éteint puis les bornes repères 20 à 23 sont retirées du support 4. La gravure du motif sur le support 4 est terminée.

Dans le cas contraire, lors de l'étape 80, l'opérateur déplace manuellement le stylo 8 vers des emplacements de la zone de gravure 10 ou la gravure n'a pas encore été réalisée. A l'issue de cette étape 80, les étapes 56 à 80 sont réitérées tant que tous les pixels du motif à graver n'ont pas été gravés sur le support 4.

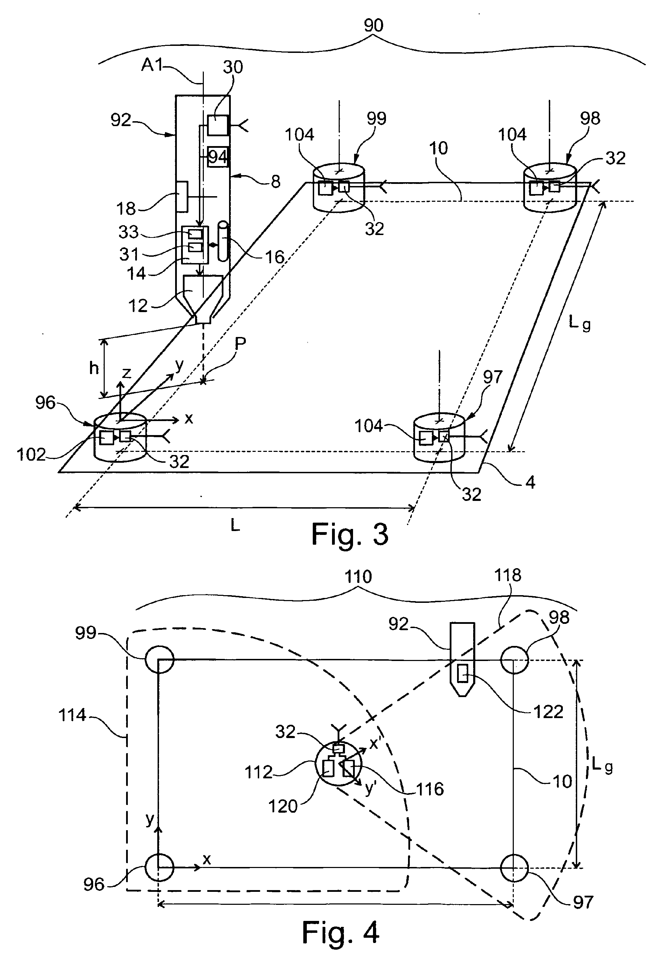

La figure 3 représente un dispositif 90 de gravure identique au dispositif 2 mais avec une unité différente de mesure de la position et de l'orientation de la tête de gravure 12. Plus précisément, l'unité de mesure est cette fois-ci réalisée à l'aide d'au moins une source magnétique triaxe et d'au moins un capteur triaxe de champ magnétique.

Par « source triaxe » de champ magnétique on désigne une source de champ magnétique capable d'émettre des champs magnétiques dans au moins trois directions non colinéaires différentes. Typiquement, ces directions d'émission sont orthogonales les unes aux autres. Par exemple une telle source triaxe est réalisée à l'aide de trois bobines enroulées chacune autour de trois axes d'enroulement perpendiculaires entre eux. Par exemple, les spires de chaque bobine sont sensiblement réparties à part égale de part et d'autre d'un point O d'intersection entre les trois axes d'enroulement. Une telle source triaxe de champ magnétique est modélisable en champ lointain comme trois dipôles magnétiques ponctuels centrés au point O. On considère que l'on est en champ lointain dès que l'on est éloigné du point O au moins de trois à quatre fois la plus grande dimension de la source triaxe. La plus grande dimension de la source triaxe est par exemple égale à la plus grande longueur des bobines. La source triaxe émet un champ magnétique soit simultanément sur chacun des axes d'émission soit séquentiellement dans le temps.

Par « capteur triaxe » de champ magnétique on désigne un capteur capable de mesurer la projection du champ magnétique sur au moins trois axes de mesure non colinéaires entre eux. Typiquement, ces axes de mesure sont orthogonaux entre eux. Un tel capteur triaxe est par exemple réalisé de façon similaire à la source triaxe à l'exception que les bobines sont utilisées pour mesurer la projection du champ magnétique et non pas pour émettre un champ magnétique.

Dans le mode de réalisation de la figure 3, le stylo 8 est remplacé par un stylo 92 identique au stylo 8. Toutefois, l'accéléromètre 34 et le magnétomètre 36 sont remplacés par un capteur triaxe 94 de champ magnétique. Ce capteur 94 est solidaire du stylo 92 et par exemple logé à l'intérieur de ce stylo.

Les bornes 20 à 23 sont remplacées par des bornes 96 à 99 identiques aux bornes 20 à 23 à l'exception du fait que les accéléromètres 38 et magnétomètres 40 sont remplacés, dans la borne 96, par une source triaxe 102 de champ magnétique et dans les bornes 97 à 99 par un capteur triaxe 104 de champ magnétique.

Les émetteurs/récepteurs 30 et 32 sont conservés pour permettre l'échange d'informations entre le stylo et les bornes repères 96 à 99. Ces échanges d'informations sont par exemple utilisés pour synchroniser temporellement la source 102 et les capteurs 94 et 104.

Le déterminateur 33 établit la position et l'orientation de la tête de gravure 12 dans le référentiel XYZ fixé sans aucun degré de liberté à la borne 96 en résolvant un système d'équations. Ce système d'équations est obtenu en modélisant les interactions magnétiques entre la source triaxe 102 et le capteur triaxe 94. Dans ce système d'équations, les coordonnées x, y et z et $\theta_x$, $\theta_y$ et $\theta_z$ de la tête de gravure sont les inconnues. Plus d'informations sur de tels systèmes d'équations peuvent, par exemple, être trouvées dans la demande de brevet EP 1 502 544. On pourra également se référer à la demande de brevet FR 09 53 462.

De plus, dans ce mode de réalisation, le plan pré-enregistré comporte une seule strate dans laquelle chaque pixel est associé à une durée respective $\Delta_i$ prédéterminée de gravure, où l'indice i identifie le pixel de la strate.

Le fonctionnement du dispositif 90 est identique à celui décrit en regard de la figure 2 sauf que :

- la position et l'orientation de la tête de gravure sont mesurées différemment, et
- la détermination d'un pixel à graver est réalisée différemment.

Plus précisément, lors de l'opération 72, l'unité détermine que le pixel de coordonnées $x_p$ et $y_p$ est à graver si celui-ci est associé, dans la copie de travail, à une durée $\Delta_i$ de gravure strictement positive.

Ensuite, lors de l'étape 74, la gravure du point P est maintenu tant que le stylo n'est pas déplacé et que la durée décomptée par l'horloge 31 est inférieure à la durée $\Delta_i$. A l'inverse, la gravure du point P est interrompue :

a) automatiquement dès que la durée décomptée par l'horloge 31 atteint la durée $\Delta_i$, ou
b) si l'opérateur déplace le stylo 92 au-dessus d'un autre point P.

Dans les deux cas d'interruption, l'unité 14 calcule la différence entre la durée $\Delta_i$ et la durée décomptée par l'horloge 31. Ensuite, à la fin de l'étape 74, l'unité enregistre cette différence en tant que nouvelle durée $\Delta_i$ associée au pixel de coordonnées $x_p$ et $y_p$ dans la copie de travail du plan du motif. La durée $\Delta_i$ enregistrée dans la copie de travail est donc fonction du temps cumulé de gravure du point P. Ainsi, ce procédé permet également de maîtriser la profondeur de gravure au niveau de chaque point P.

La figure 4 représente un dispositif 110 de gravure par exemple identique au dispositif 90 à l'exception qu'il comporte au moins une borne relais. Pour simplifier la figure 4, seule une borne relais 112 a été représentée.

La borne relais 112 permet d'augmenter les dimensions de la zone de gravure 10 sans pour autant augmenter la puissance des signaux utilisés pour mesurer la position et l'orientation de la tête de gravure. Plus précisément, dans ce mode de réalisation, la portée utile du champ magnétique émis par la source 102 incorporée dans la borne 96 est représentée par une zone de couverture 114. On se place ici dans l'hypothèse où cette zone de couverture 114 n'est pas suffisamment étendue pour inclure les bornes 97 et 98.

La borne 112 comprend l'émetteur/récepteur 32 pour échanger des informations avec les autres bornes et le stylo 92. Cette borne 112 comprend également une source triaxe 116 de champ magnétique par exemple identique à la source 102. La portée utile de cette source 116 est représentée par une zone de couverture 118. La borne 112 est disposée à l'intérieur de la zone de couverture 114 de manière à ce que sa propre zone de couverture 118 soit suffisamment étendue pour inclure les bornes 97 et 98. De plus, ici, le stylo 92 est situé dans la zone de couverture 118 et non pas dans la zone de couverture 114.

Enfin, la borne relais 112 comprend un capteur triaxe 120 par exemple identique au capteur 104.

Un convertisseur 122 de coordonnées est implanté en plus dans le stylo 92.

Etant donné que les bornes 97 et 98 et le stylo 92 sont uniquement dans la zone de couverture 118, la position et l'orientation de ces bornes 97 et 98 et du stylo 92 sont exprimées dans un référentiel X'Y'Z' fixé sans aucun degré de liberté à la borne 112 (seul les directions X' et Y' sont visibles sur la figure 4). Toutefois, étant donné que la borne 112 comprend le capteur 120, la position et l'orientation de cette borne 112 par rapport à la borne 96 sont mesurées. A partir de ces mesures, le convertisseur 122 convertit les coordonnées x', y', z' du stylo 92 exprimées dans le référentiel X'Y'Z' en des coordonnées x, y, z exprimées dans le référentiel XYZ puisque la position et l'orientation de la borne relais 112 dans ce référentiel XYZ sont connues. A partir de ce moment là, le fonctionnement du dispositif 10 est identique à celui du dispositif 90.

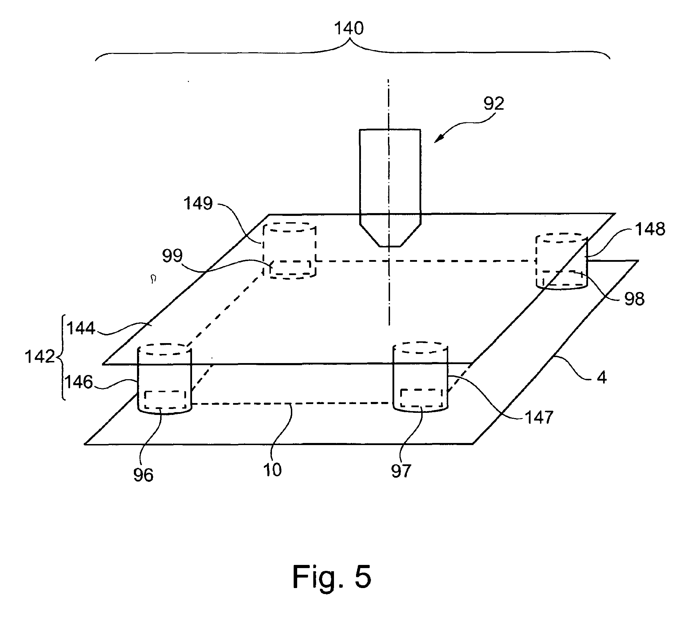

La figure 5 représente un dispositif 140 de gravure indique au dispositif 90 sauf qu'il comporte en plus une table 142 de protection contre les projections d'éclats. La table 140 comprend à cet effet une vitre 144 transparente au faisceau laser émis par le stylo 92. Par exemple, la vitre 144 est en Séténium de Zinc (ZnSe). La vitre 144 recouvre ici la totalité de la zone de gravure 10. Par exemple, elle est rectangulaire. La vitre 144 est interposée entre le stylo 92 et le support 4. Ainsi, si la gravure au point P entraîne la projection d'un éclat, cet éclat est stoppé par la vitre 144 avant qu'il ne puisse atteindre la main de l'opérateur.

La table 140 comprend plusieurs pieds pour maintenir la vitre 144 au-dessus du support 4. Ici, la table 140 comprend quatre pieds 146 à 149 disposés chacun dans un angle respectif de la vitre 144. Ces pieds reposent directement sur le support 4.

Les bornes repères 96 à 99 sont fixées sans aucun degré de liberté, respectivement, aux pieds 146 à 149. Par exemple, elles sont logées à l'intérieur des pieds 146 à 149. Ainsi, l'opérateur dispose en une seule opération les quatre bornes repères 96 à 99 et la vitre 144.

De préférence, les bornes repères se situent à l'extrémité libre des pieds 146 à 149 pour reposer, comme dans le mode de réalisation de la figure 3, directement sur le support 4. Toutefois, si cela n'est pas le cas, alors elles sont disposées à une hauteur connue $h_b$ au-dessus du support. Cette hauteur $h_b$ est prise en compte lors de la détermination des coordonnées du point P de gravure. A part cette différence, le fonctionnement du dispositif 140 est identique à celui du dispositif 90.

De nombreux autres modes de réalisation sont possibles. En particulier, d'autres types de gravure qu'une gravure par laser sont possibles. Par exemple, la tête de gravure 12 peut être remplacée par une autre tête de gravure propre à réaliser une gravure par projection de projectiles en matériau abrasif. Par projectile en matériau abrasif, on entend une particule destinée à être projetée contre le support 4, et réalisée en un matériau apte à arracher par frottement de la matière audit support. Les projectiles en matériau abrasif peuvent être du sable de corindon d'un calibre inférieur à 100$\mu$m, des billes en céramiques de diamètre inférieur à 250$\mu$m, du verre pilé, de la grenaille métallique, ...etc. Dans le cas où la gravure est réalisée par projection de projectile, de préférence, l'unité compare la hauteur h déterminée à un seuil maximum $S_3$ au-delà duquel la gravure devient inopérante. Si ce seuil $S_3$ est franchi, la gravure est automatiquement inhibée.

Le dispositif de gravure n'est pas nécessairement portable. Par exemple, la source du rayonnement laser peut être implantée en dehors du stylo. Dans ce cas, le stylo est relié à la source par une fibre optique. Ce dernier mode de réalisation permet notamment d'utiliser des sources de rayonnement plus puissante. Par exemple, la puissance du faisceau est supérieure à 10 ou 50W.

Pour graver des matériaux très fragiles, une source de rayonnement moins puissante peut aussi être utilisée. Par exemple, la puissance du faisceau est supérieure ou égale à 0,2W.

D'autres unités de mesures que celles utilisant des bornes repères peuvent être utilisées. Par exemple, le stylo peut être localisé en mesurant son accélération depuis un point de départ connu sur le support.

La forme du support peut être quelconque, son inclinaison par rapport à la verticale peut également être quelconque ainsi que sa taille ou la nature du matériau du support. Par exemple, le support peut être du papier, une plaque de verre, un mur, un plafond, un enduit, ...etc. Seule la tête de gravure est éventuellement adaptée à la nature du matériau du support.

Lorsque le support est incliné par rapport à la verticale, de préférence, les bornes repères sont équipées de moyens de fixation de celles-ci sur le support 4. Par exemple, la face plane de ces bornes destinée à venir en contact avec le support est recouverte d'un adhésif permettant de coller et ensuite de décoller manuellement ces bornes sur le support.

Si la zone de gravure est supérieure à la portée des signaux nécessaires pour mesurer la position et l'orientation de la tête de gravure, plutôt que d'utiliser des bornes relais, les bornes repères peuvent être remplacées par des bornes repères capables d'émettre des signaux dont la puissance et la portée sont augmentées.

Le nombre de bornes repères peut être supérieur à quatre. Par exemple, plus de quatre bornes repères permettent de délimiter simplement des zones de gravure ayant plus de quatre angles telles que par exemple une zone de gravure pentagonale.

Le nombre de bornes repères peut également être inférieur à quatre. Par exemple, dans un cas simplifié, une seule borne repère est nécessaire. Par exemple, dans le mode de réalisation de la figure 3, les bornes 97 à 99 du dispositif 90 sont omises. Toutefois, dans ce dernier cas, les coefficients d'étirement ne sont plus fonction de la distance entre deux bornes repères. Les dimensions de la zone de gravure sont donc constantes ou systématiquement prises égales aux dimensions du motif ou uniquement déduites à partir des dimensions du motif.

En variante, la relation prédéfinie qui relie une borne repère à un pixel du plan du motif est préenregistrée uniquement pour une ou plusieurs premières bornes repères et n'est pas préenregistrée pour une ou plusieurs secondes bornes repères. Par exemple, il n'y a qu'une seule première borne repère. Ensuite, la relation prédéfinie est établie pour les secondes bornes repères par calcul. Par exemple, la relation prédéfinie est établie pour les secondes bornes repères en fonction des mesures de leur position par rapport à la première borne repère et de la relation prédéfinie qui relie cette première borne repère à un pixel du plan du motif.

Les bornes repères ne correspondent pas nécessairement à un angle du motif. Par exemple, en variante, chaque borne repère est associée à un point prédéfini du motif autre qu'un angle de ce motif. En particulier, une borne repère peut être associée au centre du motif tandis qu'une autre borne repère est associée à un point médian du bord supérieur du motif.

Les bornes repères peuvent être placées d'un côté du support tandis que le stylo se trouve de l'autre côté.

La répartition des différents éléments décrits en regard des figures précédentes entre d'une part le stylo et d'autre part les bornes peut être modifiée. Par exemple, en variante, l'unité de commande et la mémoire sont logées dans une borne. De façon générale, toutes les fonctions décrites ici comme étant réalisées par des éléments du stylo peuvent être réparties différemment entre le stylo et les bornes.

La mémoire dans laquelle est enregistrée le plan du motif à graver n'est pas non plus nécessairement dans le stylo ou l'une des bornes. Elle peut, par exemple, être située dans un ordinateur apte à communiquer avec le stylo 8 par l'intermédiaire de l'interface 18. Dans ce cas, le stylo peut récupérer au fur et à mesure qu'il en a besoin, les informations sur le plan du motif à graver.

Il est également possible que la source magnétique soit dans le stylo et non pas dans la borne ou que plusieurs sources magnétiques soient utilisées simultanément dont au moins une dans une borne et au moins une dans le stylo.

En variante, la source 116 et le capteur 120 sont réalisés à l'aide d'un même ensemble triaxe de trois bobines dont les axes d'enroulement ne sont pas colinéaires. Dans ce cas, l'ensemble triaxe est piloté soit en mode source soit en mode capteur. Lorsque les bobines de l'ensemble triaxe sont pilotées en mode source, elles sont alimentées pour générer les champs magnétiques. Dans le mode source, l'ensemble triaxe est identique à l'une des sources triaxes décrites précédemment. Dans le mode capteur, les bobines ne sont pas alimentées. Par conséquent, le flux magnétique ambiant qui les traverse entraîne la présence de courants qui constituent la mesure du champ magnétique ambiant. Dans le mode capteur, l'ensemble triaxe est identique à l'un des capteurs triaxes décrits précédemment.

D'autres types d'ondes que les ondes ultralarge bande peuvent être utilisées. Par exemple des ondes acoustiques peuvent être utilisées.

Le facteur d'étirement peut être déterminé uniquement à partir de la distance séparant par exemple deux bornes repères l'une de l'autre. Typiquement, dans ce cas là, ces bornes repères sont utilisées pour repérer la diagonale du motif à graver et seront de préférence situées aux extrémités de cette diagonale.

Dans une autre variante, le calcul du facteur d'étirement est omis. Dans ce cas, la dimension de la zone de gravure est constante ou alors uniquement établie à partir des dimensions du plan du motif enregistré dans la mémoire 16.

L'orientation du stylo peut aussi être représentée par un quaternion.

Si chaque source génère de façon continue un champ magnétique périodique avec un motif fréquentiel qui lui est propre, alors une synchronisation temporelle entre la source 102 et les capteurs 94 et 104 par l'intermédiaire des émetteurs/récepteurs 30, 32 n'est pas nécessaire. A la place, une détection synchrone peut être utilisée.

Le procédé de gravure peut également être modifié. Par exemple, l'arrêt de la gravure automatique peut être omis. Dans ce cas, la gravure sur le support 4 est arrêtée par l'opérateur et non pas automatiquement.

Les différents modes de réalisation de l'opération 72 et de l'étape 74 décrits ici peuvent être combinés avec n'importe quel mode de réalisation du dispositif de gravure.

L'étape 77 peut être modifiée pour permettre les gravures successives d'un même point de la zone de gravure lors de chaque passage du stylo sur ce point. Par exemple, lors de l'étape 77, l'information associée au pixel gravé n'est pas modifiée.

L'étape 62 peut être modifiée pour mettre en oeuvre d'autres critères de décision quant à l'opportunité d'inhiber automatiquement la gravure. Par exemple, dans une variante simplifiée, la comparaison au seuil $S_1$ ou $S_2$ est omise.

Dans une autre variante, lorsque la hauteur h passe en dessous du seuil $S_1$, une alarme, par exemple un signal sonore, est automatiquement déclenchée pour signaler à l'opérateur que le stylo 8 est trop proche du support 4.

Lors de l'étape 68, la commande de la tête de gravure peut être fonction de l'orientation de l'axe A1 et/ou de la distance h entre la tête 12 et le support. A l'inverse, le réglage de la tête de gravure en fonction de l'orientation ou de la distance h mesurée peut être omis.

La table 140 peut être incorporée dans tous les autres modes de réalisation du dispositif de gravure. Par exemple, si elle est incorporée au dispositif 2, alors les bornes 20 à 23 remplacent les bornes 96 à 99.

La table 140 peut comporter un nombre de pieds différent de quatre. Toutefois, de préférence, elle comporte au moins trois pieds. L'extrémité de chaque pied peut être équipée d'un mécanisme de fixation sur le support 4 tel que des ventouses. Cela permet alors de disposer la table 140 sur des supports inclinés ou verticaux.

Dans une autre variante, le dispositif 2 comporte simultanément plusieurs stylos utilisés pour graver simultanément la même motif dans la même zone de gravure. Cela permet alors à plusieurs opérateurs de travailler à la gravure du même motif en même temps dans la même zone de gravure. Pour que les différentes parties du même motif gravé par chacun des stylos se juxtaposent parfaitement, il suffit simplement que la position de chacun de ces stylos soit mesurée dans le même référentiel lié aux bornes repères.

Les caractéristiques objets des revendications dépendantes peuvent être mises en oeuvre indépendamment des caractéristiques permettant d'inhiber automatiquement la gravure du motif. En particulier, l'utilisation d'une borne relais peut être mise en oeuvre sans que soient implémentées les caractéristiques pour inhiber la gravure du motif en un point P particulier.

**Revendications**

1. Dispositif de gravure d'un motif dans une zone de gravure aménagée sur un support matériel, ce dispositif comprenant :

   - au moins un stylo (8 ; 92) librement déplaçable manuellement par rapport à la zone de gravure, ce stylo étant équipé d'une tête (12) de gravure apte à graver le support au niveau d'un point de gravure lorsque la gravure est déclenchée,

   **caractérisé en ce que** le dispositif comporte :

   - une unité de mesure de la position et de l'orientation de la tête de gravure par rapport au support, et
   - une unité (14) de commande apte :

     • à calculer les coordonnées du point de gravure en fonction de la position et de l'orientation mesurées de la tête de gravure, et
     • à déclencher la gravure au niveau de ce point de gravure si les coordonnées calculées pour ce point de gravure correspondent aux coordonnées d'un point à graver codé dans un plan pré-enregistré du motif et, dans le cas contraire, à inhiber automatiquement la gravure.

2. Dispositif selon la revendication 1, dans lequel :

- le dispositif comprend au moins une borne repère (20-23 ; 96-99) amovible positionnable manuellement sur le support et associée à un point correspondant du motif à graver par une relation prédéfinie indépendante de la position de cette borne repère sur le support,
- l'unité de mesure est apte à mesurer la position et l'orientation de la tête de gravure par rapport à la borne repère, et
- l'unité (14) de commande est apte à établir la correspondance et, en alternance, l'absence de correspondance entre les coordonnées calculées du point de gravure et les coordonnées du point à graver en fonction de la relation prédéfinie qui associe un point du motif à cette borne.

3. Dispositif selon la revendication 2, dans lequel le dispositif comprend :

- au moins deux bornes repères (20-23 ; 96-99),
- l'unité de mesure est apte à mesurer la distance entre ces deux bornes repères, et
- l'unité (14) de commande est apte à établir la correspondance et, en alternance, l'absence de correspondance entre les coordonnées calculées du point de gravure et les coordonnées du point à graver en fonction en plus de la distance mesurée entre ces deux bornes repères pour étirer ou rétrécir le motif proportionnellement à cette distance.

4. Dispositif selon l'une quelconque des revendications 2 à 3, dans lequel :

- le dispositif comprend au moins une borne relais (112) positionnable manuellement indépendamment de la borne repère, cette borne relais n'étant pas associée à un point du motif par une relation prédéfinie indépendante de sa position par rapport au support, et
- l'unité de mesure comprend aussi :

• un capteur (94) de la position et de l'orientation de la tête de gravure dans un référentiel solidaire de cette borne relais,
• un capteur (120) de la position et de l'orientation de la borne relais par rapport à la borne repère, et
• un convertisseur (122) de la position et de l'orientation mesurées de la tête de gravure exprimées dans le référentiel solidaire de la borne relais en une position et une orientation relatives à la borne repère.

5. Dispositif selon l'une quelconque des revendications précédentes, dans lequel la tête (12) de gravure est apte à émettre un faisceau laser qui grave le point de gravure.

6. Dispositif selon l'une quelconque des revendications 2 à 4 et selon la revendication 5, dans lequel :

- le dispositif comporte une table (142) équipée d'une vitre (144) de protection contre les projections d'éclats de gravure et des pieds destinés à reposer sur le support,
- la ou les bornes repères sont fixées sans aucun degré de liberté à cette table.

7. Dispositif selon l'une quelconque des revendications 1 à 4, dans lequel la tête (12) de gravure est apte à projeter des particules en matériau abrasif qui gravent le point de gravure.

8. Procédé de gravure d'un motif dans une zone de gravure aménagée sur un support matériel, ce procédé comportant :

- le déplacement manuel d'un stylo librement dans la zone de gravure, ce stylo étant équipé d'une tête de gravure apte à graver le support au niveau d'un point de gravure lorsque la gravure est déclenchée,

**caractérisé en ce que** ce procédé comprend:

- la mesure (56, 58) de la position et de l'orientation de la tête de gravure par rapport au support,
- le calcul (66) des coordonnées du point de gravure en fonction de la position et de l'orientation mesurées de la tête de gravure, et
- le déclenchement (77) de la gravure au niveau de ce point de gravure si les coordonnées calculées pour ce point de gravure correspondent aux coordonnées d'un point à graver codé par un plan pré-enregistré du motif et, dans le cas contraire, l'inhibition automatique de la gravure.

9. Procédé selon la revendication 8, dans lequel le procédé comprend :

a) la mémorisation (77) de chaque point du motif déjà gravé en réponse au déclenchement de la gravure,
b) l'inhibition de la gravure de tout point déjà gravé, et
c) après avoir été déclenchée, la gravure d'un point est automatiquement arrêtée (74) après une durée prédéterminée.

10. Procédé selon la revendication 9, dans lequel les étapes a) à c) sont réitérées pour chaque strate du plan pré-enregistré, ce plan pré-enregistré comportant au moins deux strates codant chacune les coordonnées des points à graver dans une strate respective du support.

11. Procédé selon la revendication 8, dans laquelle le procédé comprend :

- le décompte (77) du temps cumulé passé à graver un même point de gravure, et
- l'inhibition de toute nouvelle gravure de ce point de gravure si le temps de gravure décompté franchit un seuil prédéterminé et, dans le cas contraire, l'autorisation d'une nouvelle gravure de ce point.

12. Procédé selon l'une quelconque des revendications 8 à 11, dans lequel le procédé comprend la détermination (60) de la distance qui sépare le stylo du support à partir de la mesure de la position et de l'orientation de la tête de gravure et l'inhibition (64) de la gravure du motif sur le support ou le déclenchement d'une alarme si cette distance est inférieure à un seuil prédéterminé.

13. Support (16) d'enregistrement d'informations pour un calculateur électronique, **caractérisé en ce qu'**il comporte des instructions pour la mise en oeuvre d'un procédé conforme à l'une quelconque des revendications 8 à 12.

14. Stylo (8 ; 92) pour la mise en oeuvre d'un dispositif avec une unité de mesure conforme à l'une quelconque des revendications 1 à 7, ce stylo étant équipé d'une tête (12) de gravure déplaçable manuellement dans la zone de gravure, **caractérisé en ce que** le stylo est équipé d'au moins une partie des éléments (30 ; 94) de l'unité de mesure apte à mesurer la position de la tête de gravure par rapport au support.

**Patentansprüche**

1. Vorrichtung zum Gravieren eines Motivs in eine Gravierzone, die auf einem materiellen Träger ausgenommen ist, wobei diese Vorrichtung umfasst:

- mindestens einen Stift (8; 92), der manuell frei in Bezug zur Gravierzone beweglich ist, wobei dieser Stift mit einem Gravierkopf (12) versehen ist, der geeignet ist, den Träger im Bereich eines Gravierpunktes zu gravieren, wenn die Gravur ausgelöst wird,

**dadurch gekennzeichnet, dass** die Vorrichtung umfasst:

- eine Einheit zum Messen der Position und der Ausrichtung des Gravierkopfes in Bezug zum Träger, und
- eine Steuereinheit (14), die geeignet ist:

* die Koordinaten des Gravierpunktes in Abhängigkeit von der gemessenen Position und Ausrichtung des Gravierkopfes zu berechnen, und
* die Gravur im Bereich dieses Gravierpunktes auszulösen, wenn die für diesen Gravierpunkt berechneten Koordinaten den Koordinaten eines codierten zu gravierenden Punktes in einer voraufgezeichneten Ebene des Motivs entsprechen, und im umgekehrten Fall die Gravur automatisch zu verhindern.

2. Vorrichtung nach Anspruch 1, wobei:

- die Vorrichtung mindestens eine abnehmbare Referenzklemme (20-23; 96-99) umfasst, die manuell auf dem Träger positionierbar ist und mit einem entsprechenden Punkt des zu gravierenden Motivs durch ein vordefiniertes Verhältnis, das von der Position dieser Referenzklemme auf dem Träger unabhängig ist, verbunden ist,
- die Messeinheit geeignet ist, die Position und die Ausrichtung des Gravierkopfes in Bezug zu der Referenzklemme zu messen, und
- die Steuereinheit (14) geeignet ist, die Übereinstimmung und alternierend die fehlende Übereinstimmung zwischen den berechneten Koordinaten des Gravierpunktes und de Koordinaten des zu gravierenden Punktes in Abhängigkeit von dem vordefinierten Verhältnis, das einen Punkt des Motivs mit dieser Klemme verbindet, festzustellen.

3. Vorrichtung nach Anspruch 2, wobei die Vorrichtung umfasst:

- mindestens zwei Referenzklemmen (20,23; 96-99),
- die Messeinheit, die geeignet ist, den Abstand zwischen diesen beiden Referenzklemmen zu messen, und
- die Steuereinheit (14), die geeignet ist, die Übereinstimmung und alternierend die fehlende Übereinstimmung zwischen den berechneten Koordinaten des Gravierpunktes und de Koordinaten des zu gravierenden Punktes ferner in Abhängigkeit von dem gemessenen Abstand zwischen diesen beiden Referenzklemmen festzustellen, um das Motiv proportional zu diesem Abstand zu vergrößern oder zu verkleinern.

**4.** Vorrichtung nach einem der Ansprüche 2 bis 3, wobei:

- die Vorrichtung mindestens eine Relaisklemme (112) umfasst, die manuell unabhängig von der Referenzklemme positionierbar ist, wobei diese Klemme nicht mit einem Punkt des Motivs durch ein vordefiniertes Verhältnis unabhängig von ihrer Position in Bezug zum Träger verbunden ist,

- die Messeinheit auch umfasst:

* einen Fühler (94) für die Position und Ausrichtung des Gravierkopfes in einem mit dieser Relaisklemme verbundenen Bezugssystem,
* einen Fühler (120) für die Position und Ausrichtung der Relaisklemme in Bezug zur Referenzklemme, und
* einen Umsetzer (122) der gemessenen Position und Ausrichtung des Gravierkopfes, die in dem mit der Relaisklemme verbundenen Bezugssystem ausgedrückt sind, in eine Position und Ausrichtung in Bezug zur Referenzklemme.

**5.** Vorrichtung nach einem der vorhergehenden Ansprüche, ei der der Gravierkopf (12) geeignet ist, einen Laserstrahl zu entsenden, der den Gravierpunkt graviert.

**6.** Vorrichtung nach einem der Ansprüche 2 bis 4 und nach Anspruch 5, wobei:

- die Vorrichtung einen Tisch (142) umfasst, der mit einer Schutzscheibe (144) gegen die Projektionen von Graviersplittern und Füßen ausgestattet ist, die dazu bestimmt sind, auf dem Träger zu stehen,

- die Referenzklemme(n) ohne jeglichen Freiheitsgrad auf diesem Tisch befestigt sind.

**7.** Vorrichtung nach einem der Ansprüche 1 bis 4, wobei der Gravierkopf (12) geeignet ist, Partikel aus einem abrasiven Material zu projizieren, die den Gravierpunkt gravieren.

**8.** Verfahren zum Gravieren eines Motivs in eine Gravierzone, die auf einem materiellen Träger vorgesehen ist, wobei dieses Verfahren umfasst:

- das manuelle Verschieben eines Stiftes frei in der Gravierzone, wobei dieser Stift mit einem Gravierkopf versehen ist, der geeignet ist, den Träger im Bereich eines Gravierpunktes zu gravieren, wenn das Gravieren ausgelöst ist,

**dadurch gekennzeichnet, dass** dieses Verfahren umfasst:

- das Messen (56, 58) der Position und der Ausrichtung des Gravierkopfes in Bezug zum Träger,
- das Berechnen (66) der Koordinaten des Gravierpunktes in Abhängigkeit von der gemessenen Position und Ausrichtung des Gravierkopfes, und
- das Auslösen (77) des Gravierens im Bereich dieses Gravierpunktes, wenn die für diesen Gravierpunkt berechneten Koordinaten den Koordinaten eines zu gravierenden Punktes entsprechen, der durch eine voraufgezeichnete Ebene des Motivs codiert ist, und im umgekehrten Fall das automatische Verhindern der Gravur.

**9.** Verfahren nach Anspruch 8, wobei das Verfahren umfasst:

a) die Speicherung (77) jedes bereits gravierten Punktes des Motivs als Antwort auf das Auslösen der Gravur,
b) das Verhindern der Gravur jedes bereits gravierten Punktes, und
c) nach Auslösen der Gravur wird diese nach einer vorbestimmten Dauer automatisch angehalten (74).

**10.** Verfahren nach Anspruch 9, bei dem die Schritte a) bis c) für jede Schicht der voraufgezeichneten Ebene reiteriert werden, wobei diese voraufgezeichnete Ebene mindestens zwei Schichten umfasst, die jede der Koordinaten der zu gravierenden Punkte in einer jeweiligen Schicht des Trägers codieren.

**11.** Verfahren nach Anspruch 8, wobei das Verfahren umfasst:

- das Herunterzählen (77) der kumulierten Zeit, die für das Gravieren eines selben Gravierpunktes vergangen ist, und
- das Verhindern jeder neuen Gravur dieses Gravierpunktes, wenn die heruntergezählte Gravierzeit eine vorbestimmte Schwelle überschreitet, und im umgekehrten Fall das Gestatten einer neuen Gravur dieses Punktes.

**12.** Verfahren nach einem der Ansprüche 8 bis 11, wobei das Verfahren die Bestimmung (60) des Abstandes zwischen dem Stift und dem Träger anhand des Messens der Position und der Ausrichtung des Gravierkopfes und das Verhindern (64) der Gravur des Motivs auf den Träger oder das Auslösen eines Alarms, wenn dieser Abstand kleiner als eine vorbestimmte Schwelle ist, umfasst.

**13.** Träger (16) zur Aufzeichnung von Informationen für einen elektronischen Rechner, **dadurch gekennzeichnet, dass** er Befehle für den Einsatz eines Verfahrens nach einem der Ansprüche 8 bis 12 umfasst.

14. Stift (8; 92) für den Einsatz einer Vorrichtung mit einer Messeinheit nach einem der Ansprüche 1 bis 7, wobei dieser Stift mit einem Gravierkopf (12) ausgestattet ist, der manuell in der Gravierzone verschiebbar ist, **dadurch gekennzeichnet, dass** der Stift mit mindestens einem Teil der Elemente (30; 94) der Messeinheit ausgestattet ist, die geeignet sind, die Position des Gravierkopfes in Bezug zum Träger zu messen.

## Claims

1. A device for etching a pattern in an etching zone laid out on a material support, the device comprising:

   - at least one pen (8; 92) that can be freely moved manually with relation to the etching zone, this pen being equipped with an etching head (12) able to etch the support at an etching point when etching is initiated,

   **characterized in that** the device comprises:

   - a measuring unit for measuring the position and orientation of the etching head with relation to the support, and
   - a control unit (14) able to:

      - calculate coordinates of the etching point as a function of the measured position and orientation of the etching head, and
      - initiate etching at this etching point if the calculated coordinates of this etching point correspond to coordinates of a point to be etched, encoded in a prerecorded drawing of the pattern, and if not, automatically prevent etching.

2. The device according to claim 1, in which:

   - the device comprises at least one removable reference terminal (20-23; 96-99) that can be manually positioned on the support, associated with a corresponding point of the pattern to be etched by a predetermined relationship that is independent from the position of this reference terminal on the support,
   - the measuring unit is able to measure the position and orientation of the etching head with relation to the reference terminal, and
   - the control unit (14) is able to establish the correspondence and, alternately, the absence of correspondence between the calculated coordinates of the etching point and the coordinates of the point to be etched as a function of the predefined relationship that associates a point of the pattern with this terminal.

3. The device according to claim 2, in which the device comprises:

   - at least two reference terminals (20-23; 96-99),
   - the measuring unit is able to measure the distance between these two reference terminals, and
   - the control unit (14) is able to establish the correspondence and, alternately, the absence of correspondence between the calculated coordinates of the etching point and the coordinates of the point to be etched as a function of the measured distance between these two reference terminals so as to stretch or shrink the pattern proportionally to this distance.

4. The device according to any one of claims 2 to 3, in which:

   - the device comprises at least one relay terminal (112) that can be manually positioned independently from the reference terminal, this relay terminal not being associated with a point of the pattern by a predefined relationship that is independent from its position with relation to the support, and
   - the measuring unit also comprises:

      - a sensor (94) for sensing the position and orientation of the etching head in a reference frame integral with this relay terminal,
      - a sensor (120) for sensing the position and orientation of the relay terminal with relation to the reference terminal, and
      - a converter (122) for converting the measured position and orientation of the etching head expressed in the reference frame integral with the relay terminal into a position and orientation with relation to the reference terminal.

5. The device according to any one of the previous claims, in which the etching head (12) is able to emit a laser beam that etches the etching point.

6. The device according to any one of claims 2 to 4 and according to claim 5, in which:

   - the device comprises a table (142) equipped with a window (144) to protect against projected etching shards, and feet intended to rest on the support,
   - the reference terminal or terminals is or are fixed with no degree of freedom to this table.

7. The device according to any one of claims 1 to 4, in which the etching head (12) is able to project particles in an abrasive material for etching the etching point.

8. A method for etching a pattern in an etching zone laid out on a material support, this method comprising:

   - the manual displacement of a pen freely within the etching zone, this pen being equipped with an etching head able to etch the support at an etching point when etching is initiated,

   **characterized in that** this method comprises:

   - measuring (56, 58) the position and orientation of the etching head with relation to the support,
   - calculating (66) coordinates of the etching point as a function of the measured position and orientation of the etching head, and
   - initiating (77) etching at this etching point if the coordinates calculated for this etching point correspond to the coordinates of a point to be etched encoded in a prerecorded drawing of the pattern and, if not, automatically preventing the etching.

9. The method according to claim 8, in which the method comprises:

   a) storing (77) each point of the pattern that has already been etched in response to initiation of the etching,
   b) preventing etching of any point that has already been etched, and
   c) after initiation, automatically stopping (74) the etching of a point following a preset duration.

10. The method according to claim 9, in which steps a) to c) are reiterated for each stratum of the prerecorded drawing, this prerecorded drawing comprising at least two strata, each encoding the coordinates of points to be etched in a respective stratum of the support.

11. The method according to claim 8, in which the method comprises:

   - counting (77) the cumulative time spent etching a same etching point, and
   - preventing any new etching of this etching point if the counted etching time crosses a predefined threshold and, if not, enabling new etching of this point.

12. The method according to any one of claims 8 to 11, in which the method comprises determining (60) the distance that separates the pen from the support using the measured position and orientation of the etching head, and, if this distance is below a predefined threshold, preventing (64) etching of the pattern on the support or triggering an alarm.

13. A data storage medium (16) for an electronic calculator, **characterized in that** the medium comprises instructions for executing a method in conformance with any one of claims 8 to 12.

14. A pen (8; 92) for the execution of a device with a measuring unit in conformance with any one of claims 1 to 7, this pen being equipped with an etching head (12) for manually moving within the etching zone, **characterized in that** the pen is equipped with at least one part of the elements (30; 94) of the measuring unit able to measure the position of the etching head with relation to the support.

Fig. 1

EP 2 520 443 B1

EP 2 520 443 B1

Fig. 2

17

Fig. 3

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4564736 A
- DE 102004054940 A1
- DE 3906336 A1
- US 5436027 A
- FR 2831258 A1
- DE 4429751 A1
- EP 1502544 A
- FR 0953462